Europäisches Patentamt

European Patent Office

Office européen des brevets

(19)

(11) Publication number: **0 483 555 A1**

# EUROPEAN PATENT APPLICATION

(12)

(21) Application number: **91117117.1**

(22) Date of filing: **08.10.91**

(51) Int. Cl.5: **G21C 9/02**, G21C 7/24,
G21D 3/16, G21D 3/04

(30) Priority: **24.10.90 IT 1253290**

(43) Date of publication of application:
**06.05.92 Bulletin 92/19**

(84) Designated Contracting States:
**CH DE FR GB LI NL SE**

(71) Applicant: **ANSALDO S.p.A.**
**Piazza Carignano 2**
**I-16128 Genova(IT)**

(72) Inventor: **Criscuolo, Luigi**
**c/o Ansaldo S.p.A., Piazza Carignano 2**
**I-16128 Genova(IT)**
Inventor: **Amato, Salvatore**
**c/o Ansaldo S.p.A., Piazza Carignano 2**
**I-16128 Genova(IT)**

(74) Representative: **Perani, Aurelio et al**
**c/o JACOBACCI-CASETTA & PERANI Via**
**Visconti di Modrone 7**
**I-20122 Milano(IT)**

(54) **An intrinsic arrangement for power stabilization in a thermal nuclear reactor.**

(57) This invention relates to an intrinsic arrangement for power stabilization in a thermal nuclear reactor.

According to the invention, the arrangement comprises a plurality of metal capsules (10) distributed through the reactor core; each capsule (10) contains an appropriate amount of a two-phase (liquid/vapor) state, neutron absorber.

F i g. 2

The present invention relates to an intrinsic stabilization arrangement for stabilizing the power of a thermal nuclear reactor.

The arrangement of this invention utilizes elementary physical phenomena and can insert, in an intrinsic manner, a negative counter reaction of reactivity (NCR) in a core of a nuclear reactor as power increases, thereby contributing toward improved stability of the reactor.

The stability of a nuclear reactor may be viewed in terms of power response to variations in reactivity from such different causes as movement of the control rods, changes in the coolant flow rate, etc..

A reactor is unstable when a variation in reactivity can cause its power to increase unlimitedly. This power increase may either take place continuously or through oscillations of growing amplitude.

A reactor is stable when a variation in reactivity will bring it from one steady state to another, either continuously or through damped oscillations.

Nuclear reactors usually include some intrinsic arrangements for counter reacting to variations in reactivity which are operative to exert a stabilizing action on power transients.

The effectiveness of a counter reaction depends on its intensity and promptness.

The NCR arrangements more commonly employed in nuclear cores are tied to changes in the fuel temperature (Doppler effect) or in that of the moderator.

From the standpoint of promptness, the Doppler arrangement is quite immediate, whereas the second-mentioned one is slow, i.e. its effect is felt with a significant time lag which depends on the heat transfer time from the fuel to the moderator, and accordingly, its contribution will be secondary during fast reactivity transients.

The presence of such arrangements affects the dynamic behavior of the reactor, facilitating its control and limiting its power and temperature ranges on the occurrence of incidental transients.

It is for this reason that they are commonly regarded as elements of fundamental importance, wherewith the degree of intrinsic safety of the core is associated.

On the other hand, temperature-dependent NCR arrangements are apt to insert, during core cooling transients, positive reactivity which resists power decreases.

The negative counter reaction (NCR) arrangement according to this invention comprises, therefore, a large number of capsules distributed through the core of a nuclear reactor.

Each capsule contains a predetermined amount of a two-phase (liquid/vapor) state neutron absorber.

As power density within the fuel zone surrounding a capsule increases, the heat source in the adsorber grows due to gamma absorption and possible (n, a) reactions within the absorber, and following evaporation of the liquid, absorbing atoms migrate from the liquid region of the capsule to that occupied by the vapor, which is normally subjected to a higher neutron flow.

The absorbing atom transfer process will raise the absorption-wise effectiveness of the material present inside the capsule, and hence, insert negative reactivity in the core to oppose the power increase.

The device effectiveness tends to decrease as the life zone of the fuel progresses due to the reduction undergone by the absorbing atoms inside the capsules during the neutron irradiation. From this point of view, the device behaves like a burnable neutronic poison, also of innovative conception.

In fact, the absorber within the capsules behaves as a burnable poison in that it controls some of the core reactivity and is progressively used up as the consumption of fuel proceeds.

Unlike conventional burnable poisons, which are solid absorbers, the absorber in the capsule is characterized by:

a slow-consumption liquid phase;

a fast-consumption vapor phase.

As the operating temperature of the capsule is increased, the mass of the vapor phase absorber also increases, and ultimately, will increase the rate of consumption of the entire absorber inside the capsule.

On this account, we may talk, as mentioned above, in terms of a burnable poison of innovative conception.

Specified herein below are the basic physical principles on which the invention stands.

When two discrete zones, indicated at (L) and (V), are present within a core which are respectively subjected to neutron flows $0_L$ and $0_V$, where $0_L$ is smaller than $0_V$, a transfer of atoms of a neutron absorber

a) from (L) to (V) involves an increase of overall neutron absorption by the two zones;

b) from (V) to (L) involves a decrease in the overall neutron absorption by the two zones.

Therefore, when an absorbing atom transfer process is activated between the two zones, the neutron balance in the core will be altered,

in case a), to insert negative reactivity;

in case b), to insert positive reactivity.

An intrinsic arrangement of the NCR type can be provided if the transfer of absorbing atoms between the two zones is performed utilizing elementary physical phenomena as triggered by core power variations.

To summarize, this type of NCR arrangement requires

two discrete zones (L) and (V) at different neutron flow levels;

the provision of a neutron absorber whose atoms can be shifted from one zone to the other;

a process of absorbing atom transfer from one zone to the other, to be carried out through elementary physical phenomena and being driven by a power variation in the core.

In the light of the foregoing remarks, the capsules in this arrangement contain a two-phase (liquid/vapor) state neutron absorber.

The two zones, each with a neutron flow of its own, are provided inside a hollow metal cylinder, which is tight sealed and partly filled with a liquid neutron absorber upon its enplacement in a nuclear core.

The hollow cylinder containing the absorber will be referred to as the "capsule" hereinafter, for brevity.

The essential features of this invention are summarized and schematized in the appended claims: its objects and advantages may be appreciated, moreover, from the following detailed description thereof, to be read with reference to the accompanying drawing, in which:

Figure 1 shows schematically a sectional view taken through one at the capsules in the inventive arrangement;

Figure 2 shows, again in section, one possible layout of said capsules inside a nuclear reactor.

With reference to the drawing figures, shown at 10 is a metal capsule containing a suitable amount of an absorber which is partly liquid (zone L) and partly in a vapor state (zone V).

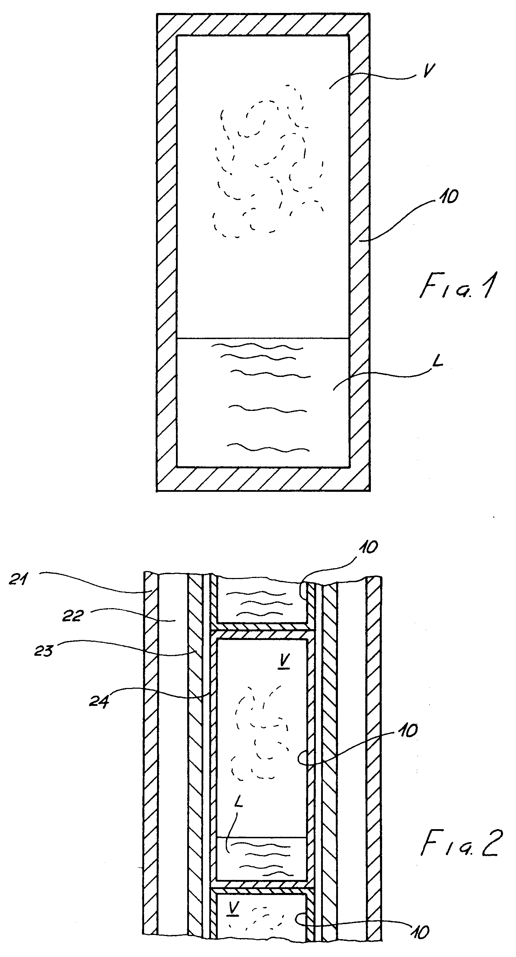

Shown in Figure 2 is a possible layout for the capsules within the core of a pressurized water reactor, in accordance with the inventive arrangement; the reference numeral 21 denotes a guide tube for a fuel element, but employed in this case to accommodate the capsules therein: indicated at 22 is an interspace wherethrough water is caused to flow; 23 denotes a sealed metal casing, usually made of steel, carrying the capsules 10 stacked on its interior; and 24 denotes the interspace formed between the outward surfaces of the capsules 10 and the inward surface of the metal casing 23.

With reference to Figure 1, in the respect of the neutron flow through the fuel surrounding the capsule 10, the zone (L) -- having the liquid phase neutron absorber (a high atomic density value) -- is characterized throughout, beyond a given axial length, by a depressed neutron flow over that in the zone (V) having the vapor phase absorber.

The elementary physical phenomena that take place, in order to have absorbing atoms transferred between the zones, are the following:

evaporation of the liquid absorber for transfer from (L) to (V);

condensation of the absorber vapor for transfer from (V) to (L).

These phenomena are controlled by the capsule temperature, which is tied, in turn, to the transfer rate of the heat generated in the capsule to an external coolant.

The coolant already provided in the core for cooling the fuel rods and ancillary core components (control rods, neutron sources, etc.) is used for this coolant.

The heat source in the capsule is a volume one deriving from the absorption of the gamma's and the neutrons present in the core, whose flows are tied directly to the power of the core.

The source of heat within the capsules will be now described.

When a capsule is placed in a core of a nuclear reactor, a source of heat is developed therein (walls + absorber) which is due to the absorption

a) of gamma's from the core, which may be standby and retarded gamma's:

standby being

the standby fission gamma's,

the gamma's resulting from neutron captures,

the gamma's resulting from the inelastic scattering of fast neutrons;

Retarded being

the gamma's resulting from decay of the fission products (retarded fission gamma's),

the activation gamma's;

b) of gamma's generated in the capsules by neutron captures (standby gamma's) and activation (retarded gamma's);

c) of alpha particles promptly generated by (n, a) reactions if B-10 is present in the capsule.

The contributions to the source of heat in a capsule depend on the core type, and accordingly, only a few generic considerations will be offered herein regarding their significance.

With power reactors, after a significant neutron irradiation time, such that the activities of the fission products can be assumed to have attained their saturation levels, it is found

a') for the gamma's under a) above, that:

the individual contributions from the standby fission gamma's, the retarded fission gamma's, and the capture standby gamma's are comparable with one another;

the contribution from the standby inelastic scattering gamma's is some percent of that from the standby fission gamma's;

the contribution from the retarded activation gamma's is negligible compared with that from the standby fission gamma's;

b') for the gamma's under b) above, that:

the contribution from the standby capture gamma's is comparable with the contribution from the standby fission gamma's;

the contribution from the retarded activation gamma's is negligible compared with that from the standby capture gamma's in the capsule;

c') for the alpha particles under c) above, that their contribution is in many cases greater than contributions a') + b').

At any selected time, the standby sources of heat within the capsule would be directly proportional to the power density of the surrounding fuel at that same time.

The retarded heat sources would be instead affected by the past fuel irradiation history.

The following criteria apply to the selection of the materials for the capsules.

The NCR arrangement of this invention comprises a number of capsules distributed through the core.

Each capsule is characterized by just two components;

the metal walls;

the two-phase absorber.

The material for the walls is selected to exhibits

mechanical strength;

resistance to attack from the absorber, with special regard to the corrosion phenomenon;

high density ($g/cm^3$), since this is apt to maximize the heat sources due to gamma absorption;

low neutron absorption, to lower the penalties on reactivity.

In these respects, the most suitable materials are, among those commonly employed in the nuclear industry: stainless steel, zircaloy, molybdenum, and in some exceptional cases, tungsten on account of its mild neutron absorber properties.

In connection with the temperature range at which the capsule is designed to operate, the absorbing material should be characterized as follows:

liquid state;

saturated vapor pressure highly variable with temperature:

limited amount of liquid such that, in the course of its full evaporation, the maximum pressure within the capsule will not exceed the ultimate pressure still ensuring mechanical integrity;

liquid in sufficient amount to cope with the absorber consumption under radiation, which would lower its effectiveness;

liquid in sufficient amount to provide, under normal operating conditions, a marked depression of the neutron flow in the liquid zone with respect to the neutron flow in the vapor zone.

Among the viable absorbers are mercury (Hg) and mercuric chloride ($HgCl_2$), wherein the heat sources are due to gamma absorption.

Other absorbers containing B-10, such as $BI_3$, in addition to the heat sources from gamma absorption, are further characterized by heat sources resulting from reactions (n, a), which involve the release of helium and a pressure increase inside the capsule.

The following considerations apply to the positioning of the capsules inside the reactor core.

The (negative and positive) reactivity inserted in the core by a capsule, which as previously mentioned depends on:

the amount of absorber that goes from the liquid phase to the vapor phase, and vice versa;

the ratio of the neutron flow in the vapor phase to that in the liquid phase;

is a small quantity.

To obtain a significant negative counter reaction effect, several capsules should be placed into the core. With some core types, the use of these capsules requires no mechanical alterations of the existing fuel, since they may be placed, stacked upon one another, inside some fuel rods after emptying the latter of their $UO_2$ pellets.

In the particular instance of PWR reactors, having burnable poisons incorporated to the fuel, the capsules could be also accommodated within sealed metal tubes to be secured in the guide tubes of the fuel elements not engaged by the control rods (Figure 2).

In the particular instance of Cirene type reactors, the capsules could be also accommodated in the spits of the fuel element columns.

The function of the inventive arrangement will be described herein below.

The primary function of this arrangement is to have, added in the core, a novel negative reactivity counter reaction mechanism to power increases.

Accordingly, its use can,

make the power coefficient of some particular reactors more readily negative;

contribute, in cooperation with other negative counter reaction mechanisms, toward limiting the power fluctuations during overpower transients brought about by an operator's error or malfunction of the control rods;

boost the Doppler reactivity coefficient, especially at high power levels, where it becomes less negative;

back up the Doppler mechanism in stopping power fluctuations triggered by a rapid insertion of positive reactivity due to ejection of a control rod;

oppose power oscillations due to xenon redistribution;

facilitate control of the reactor.

Thus, it will be appreciated from the foregoing that the arrangement of this invention enables variation of the effectiveness of the neutron absorber placed inside the capsules, on account of the change of phase of the absorber, as induced by variations in the gamma and alpha heat sources on the occurrence of a power transient within the core.

While for explanatory purposes this invention has been based on the foregoing description and illustration, many modifications and changes may occur in practicing it; such modifications and changes are encompassed by the appended claims.

## Claims

1. An intrinsic arrangement for power stabilization in a thermal nuclear reactor, characterized in that it comprises a plurality of metal capsules (10) distributed through the reactor core; wherein a suitable amount of a two-phase (liquid/vapor) state, neutron absorber is provided inside each of the capsules.

2. An intrinsic arrangement for power stabilization in a thermal nuclear reactor according to Claim 1, characterized in that said metal capsules (10) are made of a metal or an alloy of a kind having;
   high mechanical strength,
   high resistance to attack from the neutron absorber,
   high density,
   low neutron absorption.

3. An intrinsic arrangement for power stabilization in a thermal nuclear reactor according to Claim 2, characterized in that said metal capsules (10) are made preferably of one from:
   stainless steel,
   zircaloy,
   molybdenum,
   tungsten.

4. An intrinsic arrangement for power stabilization in a thermal nuclear reactor according to the preceding claims, characterized in that the neutron absorber is provided in a suitable amount to have the capsule (10) internal pressure below its collapse pressure, at peak operating temperature with all the absorber in the vapor state.

5. An intrinsic arrangement for power stabilization in a thermal nuclear reactor according to the preceding claims, characterized in that said neutron absorber is preferably one from a group including:

   mercury (Hg),
   mercuric chloride ($HgCl_2$),
   boron iodide ($BI_3$).

6. An intrinsic arrangement for power stabilization in a thermal nuclear reactor according to the preceding claims, characterized in that said capsules (10) are stacked, in the reactor core, inside guide tubes (21) for the fuel elements which have been first emptied of the pellets contained therein.

7. An intrinsic arrangement for power stabilization in a thermal nuclear reactor according to the preceding claims, characterized in that said capsules (10) are stacked, in the reactor core, inside sealed metal tubes (23) fitted into those guide tubes (21) for the fuel elements which are not engaged in the control rods.

*Fig.1*

*Fig.2*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 395 504 (SOCIETE FRANCAISE DES CONSTRUCTIONS BABCOCK & WILCOX) *page 1, right-hand column, line 27 - page 2, left-hand column, line 51; page 3, left-hand column, line 28 - right-hand column, line 27; figures 1,2 5,6* | 1-6 | G21C9/02 G21C7/24 G21D3/16 G21D3/04 |
| A | FR-A-1 215 447 (HAWKER SIDDELY NUCLEAR POWER COMPANY LIMITED, GB) *page 2, right-hand column, line 39 - page 3, left-hand column; figures 1,2* | 1,5,6 | |
| A | EP-A-0 296 954 (FRAMATOME, COURBEVOIE) * column 3, line 12 - line 30 * * column 4, line 61 - column 5, line 8 * * column 5, line 51 - line 60; figures 1,2 * | 1-3,6,7 | |

|  | TECHNICAL FIELDS SEARCHED (Int. Cl.5) |
|---|---|
| | G21C G21D |

The present search report has been drawn up for all claims

| Place of search | Date of completion of the search | Examiner |
|---|---|---|
| THE HAGUE | 29 JANUARY 1992 | JANDL F. |